# EUROPÄISCHE PATENTSCHRIFT

(11) **EP 1 159 834 B1**
(45) Veröffentlichungstag und Bekanntmachung des Hinweises auf die Patenterteilung: **08.02.2006**
(21) Anmeldenummer: 00930979.0
(22) Anmeldetag: 17.03.2000
(51) Int. Cl.: H04Q 3/00

(54) **AUSLÖSEN EINES TELEKOMMUNIKATIONSDIENSTES IM INTELLIGENTEN NETZ OHNE VERBINDUNGSAUFBAU**
METHOD AND DEVICE FOR TRIGGERING A TELECOMMUNICATIONS SERVICE
PROCEDE ET DISPOSITIF PERMETTANT DE DECLENCHER UN SERVICE DE TELECOMMUNICATION

(30) Priorität: 18.03.1999 DE 19912239
(43) Veröffentlichungstag der Anmeldung: 05.12.2001
(73) Patentinhaber: SIEMENS AKTIENGESELLSCHAFT, 80333 München (DE)
(72) Erfinder: BARTHEL, Tania, D-81369 München (DE); MORITZ, Peter, D-85540 Haar (DE); PFÖRTNER, Thomas, D-85635 Höhenkirchen (DE); DAVUTOGLU, Can, D-81673 München (DE)
(86) Internationale Anmeldenummer: PCT/DE2000/000828
(87) Internationale Veröffentlichungsnummer: WO 2000/056079

(56) Entgegenhaltungen:
- WO-A-98/09423
- US-A- 5 590 180
- "DraftETSI EN 301 931-1 V.1.1.1: Intelligent Network (IN); Intelligent Network Capability Set 3 (CS3); Intelligent Network Application Protocol (INAP); Protocol specification; Part 1: Common aspects" August 2000 (2000-08) , ETSI , SOPHIA ANTIPOLIS, FRANCE XP002146299 Absatz [04.9]
- PEARCE, P R: "CS-2 enhancements on user interaction" SIXTH IEE CONFERENCE ON TELECOMMUNICATIONS, 29. März 1998 (1998-03-29) - 1. April 1998 (1998-04-01), Seiten 235-239, XP002146298 Edinburgh, UK
- "Q.1221 Introduction to Intelligent Network Capability Set 2" , ITU-T XP002146300 Absatz [7.2.6]

## Beschreibung

### Fachgebiet der Erfindung

Die Erfindung betrifft ein Verfahren zum Auslösen eines Dienstes in einem Telekommunikationsnetz.

Unter einem Telekommunikationsdienst oder Mehrwertdienst, im folgenden auch kurz Dienst genannt, versteht man zusätzlich zu den Grundfunktionen, wie Übertragung, angebotene Funktionen des Netzes. Bekannte Dienste sind beispielsweise speziell vergebührte Rufnummern, einheitliche Rufnummer, VPN (Virtual Private Network) oder UPT (Universal Personal Telecommunications).
In öffentlichen Netzen können diese Dienste (und Leistungsmerkmale) in speziellen zentralisierten Einrichtungen implementiert werden. Änderung bestehender und Einführung neuer Dienste werden so nur an zentralisierten Steuerungspunkten vorgenommen.
Eine Grundarchitektur ist von ETSI (European Telecommunication Standards Institute) und ITU-T (International Telecommunications Union) standardisiert (Normensuite Q.1200 folgende), das sogenannte "Intelligente Netz", kurz IN.

### Stand der Technik

Der Aufruf eines IN Dienstes wie bislang bekannt, wird im folgenden beschrieben.
Der Verbindungswunsch eines Teilnehmers zur Nutzung eines IN-Dienstes wird durch die Wahl einer Dienstenummer, also z. B. eines IN-Präfixes (,01') und der Dienstkennzahl (,80') eingeleitet. Eine IN-fähige Vermittlungsstelle (SSP, Service Switching Point) kann das Vorliegen eines IN-Dienstes anhand der gewählten Ziffernfolge "0180" durch Vergleich mit dem Inhalt einer diensteübergreifenden sogenannten Trigger-Tabelle erkennen. Der Inhalt der Trigger-Tabelle ist vom Netzbetreiber vorgegeben und änderbar. Als Trigger können dabei neben der Wahl einer (Dienst-)Nummer auch Zustände einer Verbindung (Besetzt, keine Antwort, Abheben) als Trigger fungieren.
Ist die Vermittlungsstelle nicht IN-fähig, so wird durch einen vorgegebenen Leitweg eine Verbindung zu der ihr zugewiesenen IN-Vermittlungsstelle aufgebaut und die weitere Rufbehandlung mit den gewählten Ziffern als Parameter an diese abgegeben.
Der weitere Verlauf wird durch ein spezielles Anwendungsprotokoll je IN-Dienstkennzahl bestimmt, das anhand der Trigger-tabelle ausgewählt wird. Dieses Anwendungsprotokoll, welches in einer Dienstezentrale (SCP, Service Control Point) abläuft, steuert die weitere Behandlung des Anrufes. Der Mechanismus wird auch in der ITU-T Recommendation Q.1214 beschrieben.

Eine von einem Verbindungswunsch unabhängige Auslösung eines Dienstes wird in der Druckschrift US 5,590,180 beschrieben. Eine Verbindung zwischen Dienstanbieter und Kunden wird automatisch zu einer, vom Kunden zuvor gewählten, Zeit aufgebaut. Auch aus der Druckschrift WO 9809423 wird ein Verfahren offenbart, bei welchem ein Intelligent Peripheral durch die Dienstezentrale SCP einen Verbindungsaufbau, bspw. zur Übermittlung von Faxnachrichten, steuern kann.

Aufgabe der Erfindung ist es, ein neues Verfahren zur Auslösung eines Telekommunikationsdienstes anzugeben, welches unabhängig ist von einem durch den Dienstenutzer initiierten Gesprächsaufbau, insbesondere durch ein überwachtes anderes Ereignis.

### Darstellung der Erfindung

Diese Aufgabe wird gelöst durch ein Verfahren gemäß Patentanspruch 1.

Das Anwendungsprogramm (auch IN Service Logic genannt) wird durch einen sogenannten externen oder auch virtuellen Trigger ausgelöst.
Anders als bisher, wo eine Auslösung durch einen Trigger in einem Verbindungsaufbauwunsch enthalten war, kann ein Dienst jetzt durch ein beliebig zu definierendes Ereignis ausgelöst werden und mit dem aktivierenden Teilnehmer in Interaktion treten. Der Teilnehmer muß also nach der Aktivierung des Dienstes nicht mehr selber Verbindung mit der Dienstezentrale, durch Initiierung einer Verbindung, aufnehmen.

Das neue erfindungsgemäße Verfahren ermöglicht weitergehendere Telekommunikationsdienste als bisher. Ein Beispiel für einen neuen Dienst wird weiter unten im Ausführungsbeispiel ausführlich beschrieben. Es ist nicht mehr notwendig, dass einer der Dienstnutzer oder Dienstanbieter einen Verbindungsaufbau initiiert, um den Dienst auszulösen. Dies geschieht, wenn ein überwachtes anderes Ereignis eintritt und/oder mitgeteilt wird.

Vorteilhafte Ausgestaltungen und Weiterbildungen sind in den Unteransprüchen angegeben.

Der Telekommunikationsdienst kann von dem Teilnehmer aktiviert werden, so daß nur Teilnehmer den Dienst benutzen, die dies auch wirklich wünschen oder die Berechtigung dazu haben (beispielsweise Gebühren dafür entrichten).
Weiterhin ist es möglich, bei der Aktivierung zusätzliche Parameter anzugeben, beispielsweise von der aktuell benutzten unterschiedliche Rufnummern, Rufnummern von weiteren Personen, Eingabeformate, Zeitangaben, Bedingungen, die ein Auslösen des Dienstes verhinder etc.
So kann der zu realisierende Dienst noch flexibler gestaltet werden.
Die Aktionen des Dienstes können dabei beinhalten
- das Aufbauen einer Verbindung zwischen dem aktivierenden Teilnehmer und einem zweiten Teilnehmer, der beispielsweise der Dienstanbieter sein kann, oder
- zu einer automatische Ansageeinheit in dem Netz oder
- auch zu einem beauftragtes Call Center, oder
- die Information kann beispielsweise auch als SMS übertragen werden oder in einem beliebigen anderen Format.

Eine automatische Umsetzung auch auf mehrere erreichbare Rufnummern gleichzeitig oder nacheinander kann vorgenommen werden. Auch ein Verbindungsaufbau kann durch einen Dritten initiiert werden.

In einer erfindungsgemäßen Ausgestaltungsform wird durch die Dienstezentrale eine "virtuelle Rufnummer" generiert, die dem Dienstanbieter übertragen wird. Sobald das dienstauslösende Ereignis eintritt, simuliert der Dienstanbieter also einen Verbindungsaufbau, indem ein Verbindungsaufbau mit dieser virtuellen Rufnummer versucht wird. In der IN-fähigen Vermittlungsstelle (Service Switching Point) wird diese "virtuelle Rufnummer" jedoch als Dienstaufruf erkannt und an die Dienstezentrale SCP weitergeleitet, die die notwendigen Informationen wie bspw. die Telefonnummern der zu benachrichtigenden Teilnehmer gespeichert hat.

### Beschreibung der Zeichungen

Im folgenden wird die Erfindung anhand von Ausführungsbeispielen erläutert. Dabei zeigen
- Figur 1: eine schematische Darstellung des Verfahrens in einem Telekommunikationsnetz und
- Figur 2: ein Ablaufdiagramm des Verfahrens am Beispiel eines Informationsdienstes für Fluggäste.

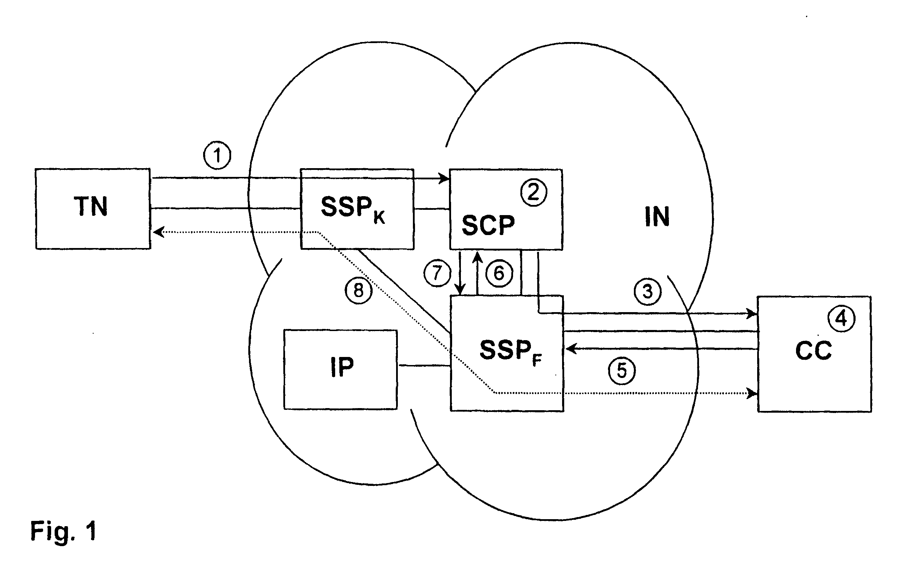

Figur 1 zeigt ein Telekommunikationsnetz IN, welches über die Möglichkeit der Realisierung von zentralisiert angebotenen Diensten verfügt. In der Dienstezentrale SCP wird das Anwendungsprogramm (die Service Logic des Dienstes) eingerichtet. In einem ersten Schritt aktiviert der Teilnehmer TN den Dienst, über die IN-fähige Vermittlungsstelle SSP_{K}. Damit erhält die Dienstezentrale notwendige Informationen zur späteren Ausführung des Dienstes, beispielsweise die Telefonnummer des aktivierenden Teilnehmers, zusätzlich weitere Telefonnummern, Zeitangaben oder ähnliches, ①.

Aus den erhaltenen Informationen generiert ② die Dienstezentrale einen "Ersatztrigger", also beispielsweise eine virtuelle Rufnummer als Auslösenummer. Diese generierte Auslösenummer, eventuell zusammen mit anderen Informationen, wird nun dem Dienstanbieter oder einer geeigneten anderen Stelle, wie einem Call Center CC, über eine IN-fähige Vermittlungsstelle SSP_{F} weitergeleitet, ③.
Tritt nun ein externes, von einem Verbindungsaufbauwunsch zu dem den Dienst aktivierenden Teilnehmer unterschiedliches Ereignis ein, aufgrund dessen der Dienst ausgelöst werden soll, ④, so wird dies von dem Dienstanbieter CC (Call Center) registriert und die Auslösenummer an die IN-fähige Vermittlungsstelle SSP_{F} gesendet, ⑤. Die Vermittlungsstelle erkennt die Auslösenummer als Dienst-Trigger und leitet sie an die Dienstezentrale SCP weiter, in welcher der Dienst aktiviert wurde, ⑥.
Der Dienst setzt nun die Auslösenummer um in einen Dienstaufruf. Dabei kann für einen Dienst eine ganze Anzahl von angemeldeten Teilnehmern betroffen sein, für die dieser Dienst nach Empfang ausgelöst wird ⑦. Die Dienstezentrale kann nun beispielsweise eine Verbindung herstellen zwischen dem Teilnehmer und dem Dienstanbieter, der den Dienst ,ausgelöst' hat, ⑧.
Es ist aber auch möglich, daß eine Verbindung aufgebaut wird, zwischen dem Teilnehmer und einem Ansagedienst IP, bei der eine möglicherweise noch den bekannten Informationen angepaßte Ansage abgespielt wird.

### Beschreibung der bevorzugten Ausgestaltungsformen

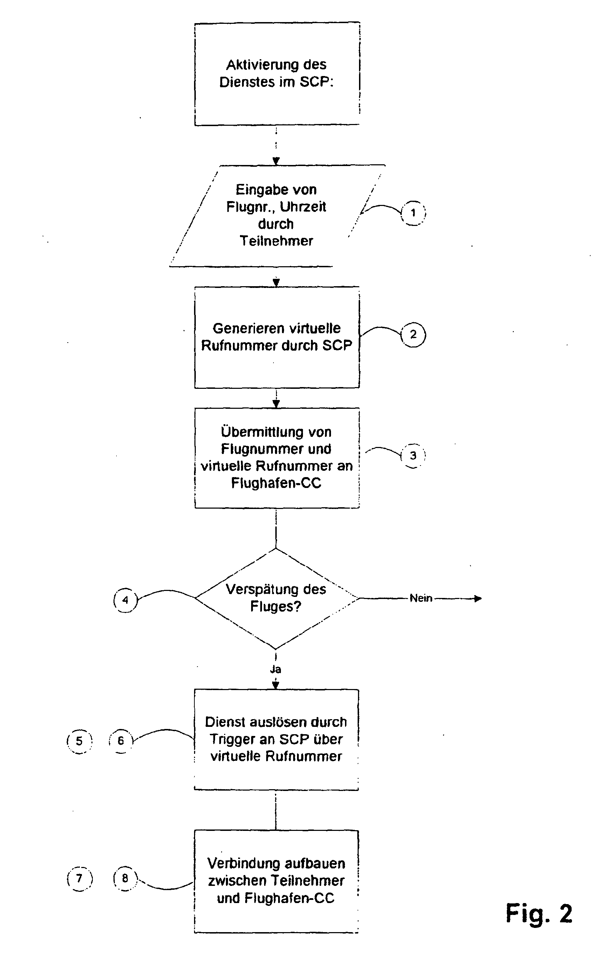

Ein Beispiel für die vorteilhafte Anwendung des erfindungsgemäßen Verfahrens wird im folgenden beschrieben: ein Informationsdienst für Fluggäste, welcher diese bei Verspätungen informieren soll. Figur 2 zeigt ein Ablaufdiagramm, welches den Fluginformationsdienst schematisch darstellt.

Der Fluggast aktiviert den "Delay Notification Service" im SCP, indem er Flugnummer, Datum und Uhrzeit und optional weitere Informationen wie den spätestens Anrufzeitpunkt (Rückruf bis 14:00 Uhr) eingibt. Außerdem muß er das Rufziel (also z. B. seine Telefonnummer) und als zusätzliches Angebot die Nummern von eventuell weiteren zu benachrichtigenden Personen, wie einen Abholer am Zielflughafen, eingeben, ①.
Das Intelligente Netz übermittelt an ein Call Center des Dienstanbieters, beispielsweise der Fluggesellschaft oder des Flughafens, die Flugnummer und eine vom IN vorgegebene generierte virtuelle Rufnummer, ②, (welche der externen Triggernummer entspricht), d. h. einen "Pointer" auf diesen Dienst.

Im Verspätungsfall (also Entscheidung Verspätung, ④, = JA) des genannten Fluges wird aus dem Call Center des Dienstanbieters direkt ein Trigger an das IN über die virtuelle Triggernummer gesendet, ⑤, ⑥. Diese Übertragung kann als Sprachverbindung oder Datenverbindung erfolgen.
Der Benachrichtigungsdienst wird aktiviert und es erfolgt eine Umsetzung von virtueller Triggernummer auf mehrere erreichbare Rufnummern der Fluggäste, die sich zu diesem Dienst angemeldet hatten.

In einer ersten Ausgestaltungsform baut das IN nun entsprechend der Vorgaben die Verbindungen zwischen den betroffenen Fluggästen und jeweils einem freien Agenten des Call Centers automatisch auf, ⑦, ⑧. Der Agent benachrichtigt den Fluggast über die Verspätung und nimmt weitere Kundenwünsche entgegen.

Es kann aber auch alternativ eine Verbindung zwischen den betroffenen Fluggästen und einer Ansageeinrichtung des IN (beispielsweise dem Intelligent Peripheral) auf. Eine entsprechend den Angaben der Aktivierung konfigurierte Ansage wird abgespielt.

Der Vorteil dieses Dienstes ist für beide Seiten offensichtlich: der Fluggast vermeidet unnötig lange Wartezeiten auf dem Flughafen, er kann den Dienst beliebig konfigurieren, so dass die Information auf ein beliebiges Endgerät (also Telefon im Büro, mobiles Endgerät etc.) geleitet werden kann. Auch für Personen, die auf ankommende Flüge warten, ist dieser Dienst komfortabel. Es ist kein Überprüfen der tatsächlichen Ankunftszeit, bspw. über Videotext oder im Internet, notwendig. Unnötige Wartezeiten werden so vermieden.
Dem Dienstanbieters wird eine einfache Handhabung gewährleistet, die Verbindungen zu den Fluggästen werden automatisch vom IN aufgebaut, keine Suche in eventuell veralteten Fluggast-Datenbanken ist notwendig. Es können vom Kunden Änderungswünsche sogleich entgegengenommen und bearbeitet werden Bei der zweiten Alternative des automatischen Ansagetextes ist kein Bedienungspersonal erforderlich.

## Patentansprüche

1. Verfahren zum Auslösen eines Telekommunikationsdienstes in einem Telekommunikationsnetz (IN),
**dadurch gekennzeichnet, dass**
- der Telekommunikationsdienst nach einer Aktivierung eine virtuelle Rufnummer generiert (2) und
- diese virtuelle Rufnummer dem Übermittler des abzuwartenden Ereignisses mitteilt (3), und
- ein Übermittler eines abzuwartenden Ereignisses, welches von einem Verbindungsaufbauwunsch eines Teilnehmers TN verschieden ist nach Eintritt des Ereignisses mittels der virtuellen Rufnummer über eine Vermittlungsstelle SSP den Telekommunikationsdienst auslöst (5), (6), und
- dieser Telekommunikationsdienst die zuvor für den Dienst definierten Aktionen durchführt (7), (8).

2. Verfahren nach Patentanspruch 1,
**dadurch gekennzeichnet, dass**
in einem ersten Schritt der Telekommunikationsdienst durch einen Teilnehmer aktiviert wird (1), damit der Dienst die ihn auslösenden Ereignisse empfängt und verarbeitet.

3. Verfahren nach Patentanspruch 2,
**dadurch gekennzeichnet, dass**
bei der Aktivierung des Telekommunikationsdienstes (1) Zusatzinformationen eingegeben werden können (2), welche bei der Auslösung des Telekommunikationsdienstes berücksichtigt werden.

4. Verfahren nach Patentanspruch 3,
**dadurch gekennzeichnet, dass**
die Zusatzinformationen Telekommunikationsdaten des Teilnehmers enthalten, welche bei späteren Aktionen des Telekommunikationsdienstes zum Übertragen von Informationen an diesen Teilnehmer führen.

5. Verfahren nach einem der vorherigen Patentansprüche,
**dadurch gekennzeichnet, dass**
nach dem Auslösen des Telekommunikationsdienstes mindestens eine Kommunikationsverbindung durch den Telekommunikationsdienst aufgebaut wird (8).

6. Verfahren nach einem der vorherigen Patentansprüche,
**dadurch gekennzeichnet, dass**
nach dem Auslösen des Telekommunikationsdienstes mindestens ein Telekommunikationsteilnehmer über den Telekommunikationsdienst eine Benachrichtigung mittels eines Datendienstes erhält.

7. Verfahren nach einem der vorherigen Patentansprüche,
**dadurch gekennzeichnet, daß**
der Telekommunikationsdienst von mehr als einem Telekommunikationsteilnehmer TN gleichzeitig aktiviert sein kann.

8. Verfahren nach einem der vorherigen Patentansprüche,
**dadurch gekennzeichnet, daß**
nach Auslösung des Telekommunikationsdienstes Aktionen für alle Telekommunikationsteilnehmer TN, die den Dienst aktiviert haben, ausgeführt werden.

## Revendications

1. Procédé pour déclencher un service de télécommunication dans un réseau de télécommunications (IN), **caractérisé en ce que**
- le service de télécommunication, après une activation, génère (2) un numéro d'appel virtuel et
- communique (3) ce numéro d'appel virtuel au communicateur de l'événement à attendre et
- un communicateur d'un événement à attendre, qui est différent d'une demande d'établissement de connexion d'un abonné TN, déclenche (5), (6) le service de télécommunication après la survenance de l'événement au moyen du numéro d'appel virtuel par l'intermédiaire d'un point de commutation SSP et
- ce service de télécommunication exécute (7), (8) les actions préalablement définies pour le service.

2. Procédé selon la revendication 1,
**caractérisé en ce que**,
dans une première étape, le service de télécommunication est activé (1) par un abonné pour que le service reçoive et traite les événements qui le déclenchent.

3. Procédé selon la revendication 2,
**caractérisé en ce que**,
lors de l'activation du service de télécommunication (1), des informations supplémentaires peuvent être introduites (2), lesquelles sont prises en compte lors du déclenchement du service de télécommunication.

4. Procédé selon la revendication 3,
**caractérisé en ce que**
les informations supplémentaires contiennent des données de télécommunication de l'abonné qui, lors d'actions ultérieures du service de télécommunication, entraînent la transmission d'informations à cet abonné.

5. Procédé selon l'une des revendications précédentes,
**caractérisé en ce que**,
après le déclenchement du service de télécommunication, au moins une connexion de communication est établie (8) par le service de télécommunication.

6. Procédé selon l'une des revendications précédentes,
**caractérisé en ce que**,
après le déclenchement du service de télécommunication, au moins un abonné des télécommunications reçoit, par l'intermédiaire du service de télécommunication, une notification au moyen d'un service de données.

7. Procédé selon l'une des revendications précédentes,
**caractérisé en ce que**
le service de télécommunication peut être activé par plus d'un abonné des télécommunications TN simultanément.

8. Procédé selon l'une des revendications précédentes,
**caractérisé en ce que**,
après le déclenchement du service de télécommunication, des actions sont exécutées pour tous les abonnés des télécommunications TN qui ont activé le service.

## Claims

1. Method for initiating a telecommunications service in a telecommunications network (IN)
**Characterized in that**
- the telecommunications service generates a virtual telephone number after activation (2) and
- signals this virtual telephone number to the transmitter of the event which is being awaited (3), and
- a transmitter of an event which is being awaited and which differs from a connection setting-up request from a subscriber TN initiates the telecommunications service via a switching point SSP by means of the virtual telephone number after the occurrence of the event (5), (6), and
- this telecommunications service carries out the actions defined in advance for that service (7), (8).

2. Method according to patent claim 1,
**characterized in that**,
in a first step, the telecommunications service is activated by a subscriber (1), in order that the service receives and processes the events which initiate it.

3. Method according to Patent Claim 2,
**characterized in that**
additional information can be entered (2), during the activation of the telecommunications service (1), and this information is taken into account in the initiation of the telecommunications service.

4. Method according to Patent Claim 3,
**characterized in that**
the additional information contains telecommunications data relating to the subscriber, which lead to transmission of information to this subscriber during subsequent actions by the telecommunications service.

5. Method according to one of the preceding patent claims,
**characterized in that**,
once the telecommunications service has been initiated, at least one communication link is set up by the telecommunications service (8).

6. Method according to one of the preceding patent claims,
**characterized in that**,
once the telecommunications service has been initiated, at least one telecommunications subscriber receives a notification by means of a data service via the telecommunications service.

7. Method according to one of the preceding patent claims,
**characterized in that**
the telecommunications service can be activated simultaneously by more than one telecommunications subscriber TN.

8. Method according to one of the preceding patent claims,
**characterized in that**,
after initiation of the telecommunications service, actions are carried out for all those telecommunications subscribers TN who have activated the service.
